# EUROPEAN PATENT SPECIFICATION

(11) **EP 4 432 203 B1**
(45) Date of publication and mention of the grant of the patent: **26.03.2025**
(21) Application number: 23161913.1
(22) Date of filing: 14.03.2023
(51) Int. Cl.: G06Q 30/06, H04N 1/00

(54) **METHOD FOR COUPLING A DIGITAL ARTWORK TO A FRAME AND CORRESPONDING FRAME**
VERFAHREN ZUR KOPPLUNG EINES DIGITALEN KUNSTWERKS AN EINEN RAHMEN UND ENTSPRECHENDER RAHMEN
PROCÉDÉ DE COUPLAGE D'UNE OEUVRE D'ART NUMÉRIQUE À UN CADRE ET CADRE CORRESPONDANT

(43) Date of publication of application: 18.09.2024
(73) Proprietor: Santucci, David, 8600 Dübendorf (ZH) (CH); Chiarot, Giacomo, 30020 Pramaggiore (VE) (IT)
(72) Inventor: SANTUCCI, David, 8600 Dübendorf (CH); CINA', Antonio Emanuele, 66111 Saarbrücken (DE); CHIAROT, Giacomo, 30020 Pramaggiore (VE) (IT)
(74) Representative: M. Zardi & Co S.A.

(56) References cited:
- WO-A1-2022/214690
- CN-A- 109 637 350
- CN-U- 206 559 763
- KR-A- 20150 146 375
- US-A1- 2009 310 028

## Description

### Field of application

The present invention relates to a method for coupling an artwork to a frame supporting the artwork. In particular, the invention relates to a method of the type indicated above, wherein the artwork to be coupled is in digital format and the frame is a physical support intended to be hung or placed on a surface, to be shown.

The present invention also relates to a frame supporting an artwork in digital format and to an empty frame which is however suitable to support the artwork in digital format.

### Prior art

As known, digital art refers to artwork or practice that uses digital technology as part of the creative and presentation process. In recent years, blockchain, and more specifically NFTs, have been associated with digital art(works) to prove ownership. Also due to this possibility, commercial interests in digital artworks, to cite some those of Sotheby's, Christie's and various museums and galleries in the world, increased. Similarly, digital artists started collaborations and partnerships, to sell NFTs associated with their digital artworks, via NFT platforms, and showcasing those artworks associated to the respective NFTs both in virtual galleries and monitors and TVs.

Although there is much excitement for all the above, digital artworks still suffer for some limitations.

The digital artwork is often confined to a small audience, mainly young, which is used to handle digital devices and new technologies such as blockchain, electronic wallets, NFTs, etc. The digital artwork is often displayed in user's mobile devices, tablets, personal computers or home TVs, in private, and circulate among these people, with very few occasions to be exposed in public environment, such as museum, for large audience. Moreover, the aforementioned devices are not dedicated to display digital artwork but are also used for other purposes, and as a result the digital artwork is displayed for short while. On the other hand, digital devices dedicated to display digital artworks are known, such a digital photo displays suitable to display the digital artwork only (and not for other purposes), but they are perceived to be of less value and prestige than a traditional artwork, such as a paint.

This is due to different reasons. As a first matter, there is no way to permanently link the digital artwork with the digital device displaying it. The perception is that the digital artwork is only temporarily displayed in the digital device and that is not owned by the owner of the digital device, but simply copied or displayed temporarily. Moreover, the appearance of the digital device is for sure less recognizable than traditional frames, in wood or other valuable materials, hand-made, possibly dated or having historical value, and to which the traditional hand-made paintings often remain structurally linked for the whole life. On the contrary, the appearance of modern digital device is all except recognizable, since they all have similar frames, i.e. contours and profiles, generally rectangular in shape.

Sometimes, the digital art is published on devices in public places, for instance in digital museum. However, also in this case, there are drawbacks. Indeed, the digital device requires an electrical connection to a power line, which is not aesthetically appreciated. In an attempt to hide the connection, some panels are used to cover the plug and the cables, but this is cumbersome, still not aesthetically pleasant, not always possible. Moreover, a lot of energy is consumed. This is meaningful since, if the digital artwork is displayed forever, like a traditional painting, energy has never to lack. As known, power consumption has become a relevant issue and relevant is the need to reduce it as much as possible. Not least, the digital device faces the backlight problem: displaying an artwork requires specific light conditions and curators cannot arrange the lights as they do for traditional artworks. In addition to this, in private homes, the backlight can be annoying. All these problems, of course, affect also digital art when displayed for private use.

To summarize, NFTs are digital objects that have to be shown in the real world to be enjoyed by people. An example is a gallery showing digital artworks using digital frames. Current solutions do not incorporate ownership into the digital devices showing the NFT. Digital devices are just a mean, while ownership, authenticity and unicity are kept by external entities.

The problem at the base of the present invention is that of providing a method to couple a digital artwork to a digital display device which is able to overcome all the above-mentioned drawbacks that still affect the prior art, in particular reducing energy consumption, providing an easy way to hung or put in place the display device, avoid that the digital artwork is scarcely offered to observers' sight since displayed only on private smartphone and handheld devices, but also to guarantee the ownership, the authenticity and the unicity of the digital artwork, at the same time creating a strong connection between the digital device and the artwork.

WO2022/214690 is an example of a method for trading a digital asset.

KR 2015 0146375 A discloses an electronic picture frame comprising an electronic paper display and a read only memory. US 2009/310028 A1 discloses an electronic picture frame comprising a read only memory which stores a frame identifier. The electronic picture frame can be registered by providing the stored frame identifier. CN 109 637 350 A discloses an electronic paper sign which is capable of communicating via NFC and is woken up by receiving an NFC signal from an external device. The NFC signal is converted into an image format which is displayed on the electronic paper display of the sign. CN 206 559 763 U discloses a tamper-detecting mechanism wherein an elastic support member and a conductive layer are provided on the surface of a device and the device is coupled with downward pressure to a circuit board.

### Summary of the invention

According to the idea of solution indicated above, the technical problem at the base of the present invention is solved by a method for coupling an artwork to a frame according to claim 1.

Advantageous embodiments of the method for coupling an artwork according to the present invention are disclosed in dependent claims 2 to 10.

The technical problem at the base of the present invention is also solved by a frame for supporting an artwork according to claim 12.

Advantageous embodiments of the frame for supporting the artwork in digital format according to the present invention are disclosed in dependent claims 13 to 14.

Further advantages and embodiments of the method and frame according to the present invention are disclosed in the following description, with reference to some drawings, given only for exemplificative purposes and not limiting the scope of protection as defined in the claims.

### Brief description of the drawings

Fig. 1: schematically represents a user electronic device and a frame according to the method for coupling an artwork to the frame of the present invention, in a phase wherein the user electronic device stores a plurality of artworks in digital format and the frame has no artwork to display.
Fig. 2: schematically represents the user electronic device and the frame according to figure 1, after a phase wherein the user electronic device has changed ownership of one of the artworks in digital format in favor of the frame, and said one of the artworks in digital format, no longer displayed in the user electronic device, has been transmitted and displayed in the frame.
Fig. 3: schematically represents an interface of the user electronic device in a phase of displaying an image of the frame of fig. 1 which has no artwork to display.
Fig. 4: schematically represents the interface of figure 3 in a phase of displaying the image of the frame of fig. 2 which is displaying the artwork.

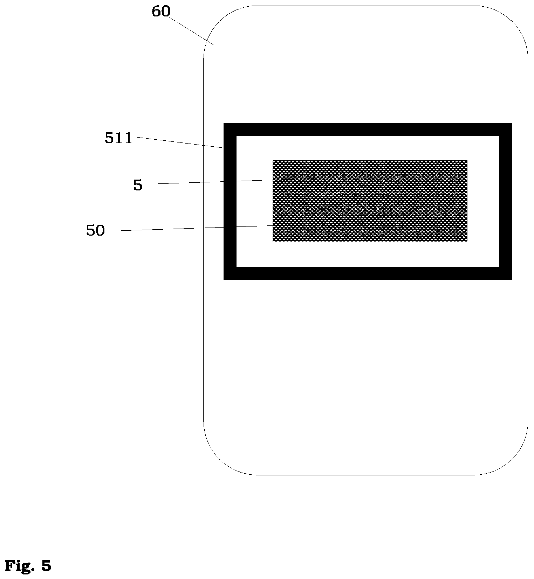

Fig. 5: schematically represents the interface of the user electronic device in a phase of displaying an image of another frame which is displaying another artwork.
Fig. 6: schematically represents information of the frame of fig. 1 in another interface of the user electronic device, said another interface providing information including a block chain identifier, a smart contract identifier and a sequence number (2) assigned by the smart contract to the frame of fig. 1 and fig. 2.
Fig. 7: schematically represents information of the frame of fig. 5 in said another interface of the user electronic device, said another interface providing information including the block chain identifier, the smart contract identifier and another sequence number (1) assigned to the frame of fig. 5 by the smart contract, wherein said another information further provide information regarding the artwork displayed in the frame of fig. 5.
Fig. 8 schematically represent how to connect an existing wallet to the application on smartphone.
Fig. 9 schematically represents how to connect a frame to the application on smartphone which is dedicated to communication with the frame.

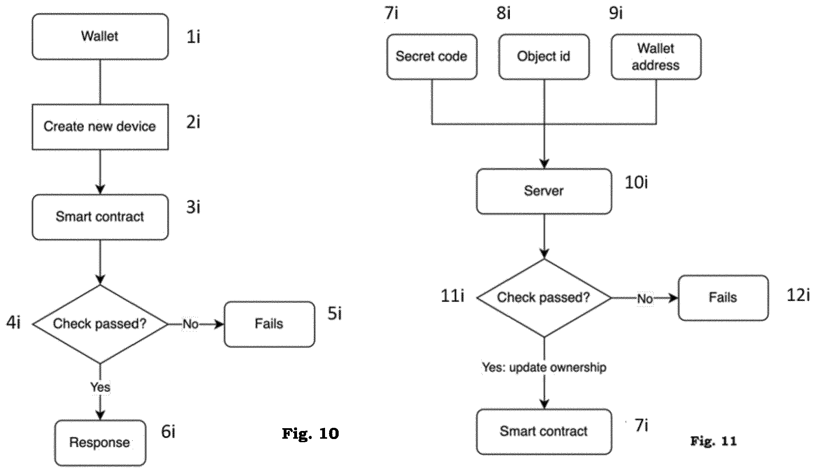

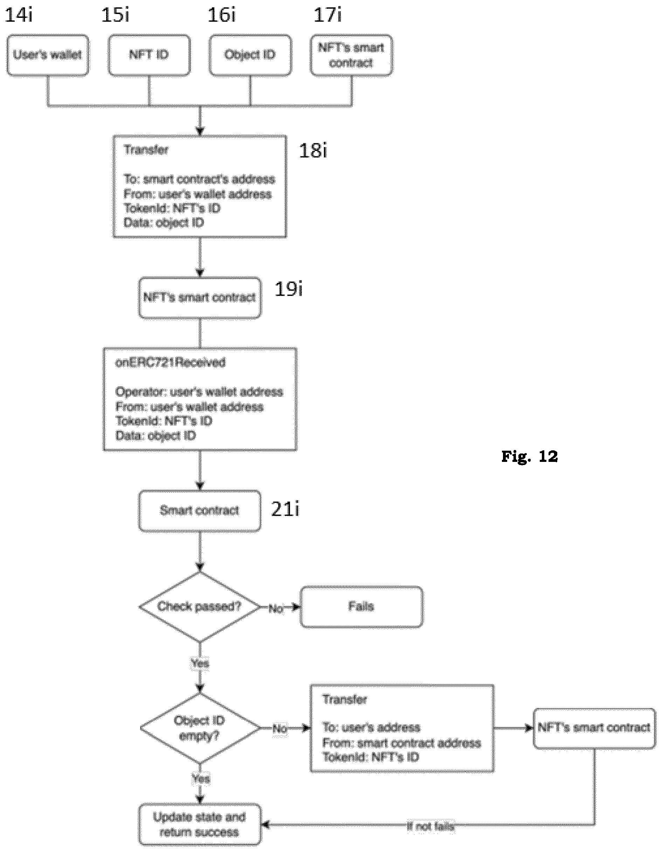

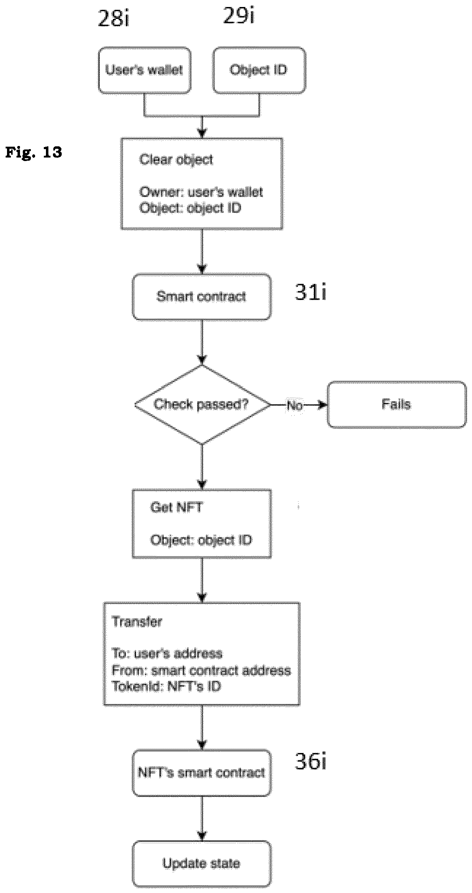

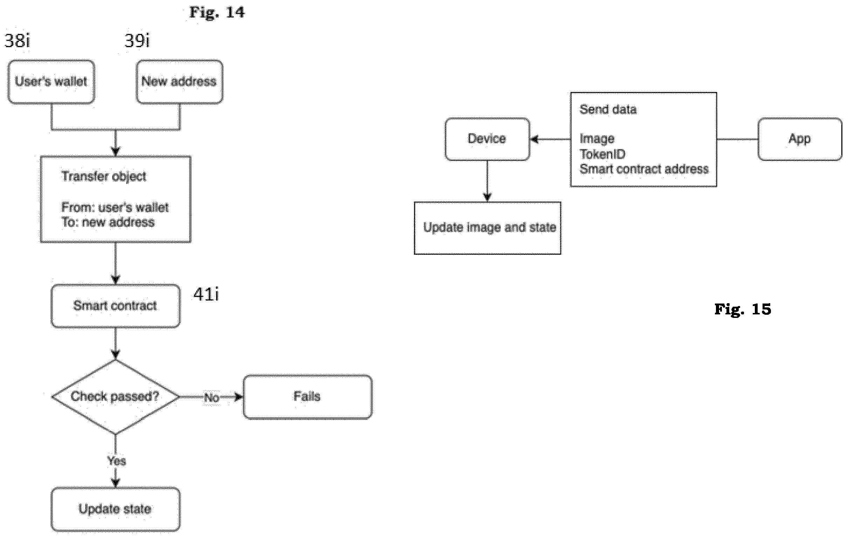

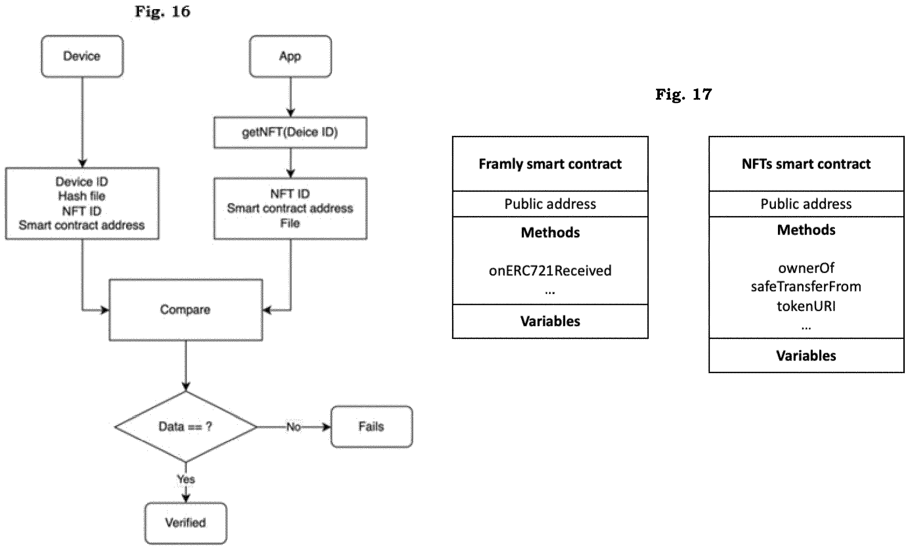

Fig.10 is a diagram of a process of creating a new digital object using a smart contract whose identification is associated to a physical support (frame) showing NFTs; Fig. 11 is a diagram of a process of how a user can pair a digital object that has not been previously associated to any user wallet; Fig.12 is a diagram of a process of transferring the ownership of one NFT to one digital object; Fig.13 is a diagram of a process of removing one NFT from a digital object. Fig. 14 is a diagram of a process of moving the ownership of one digital object from the current owner to a new one. Fig. 15 is a diagram of a process for updating the image of a frame; Fig. 16 is a diagram of a process of verification of displayed image.

Fig.17 is schema of a smart contract associated to a frame and a smart contract associated to a non-fungible token, according to the present invention.

### Detailed description of the invention

With reference to the annexed drawings, an embodiment of a method for coupling an artwork to a frame according to the present invention is hereafter disclosed.

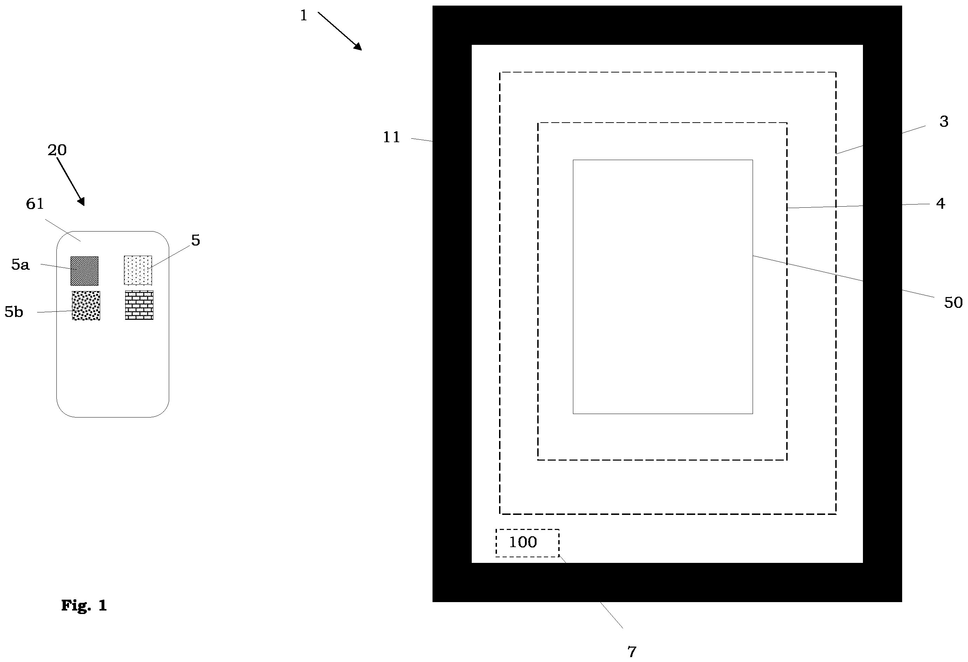

The frame is schematically represented in figure 1 and globally indicated with reference number 1. The frame 1 is intended to be hung to a wall or placed on a surface such as a desk and support the artwork to be shown.

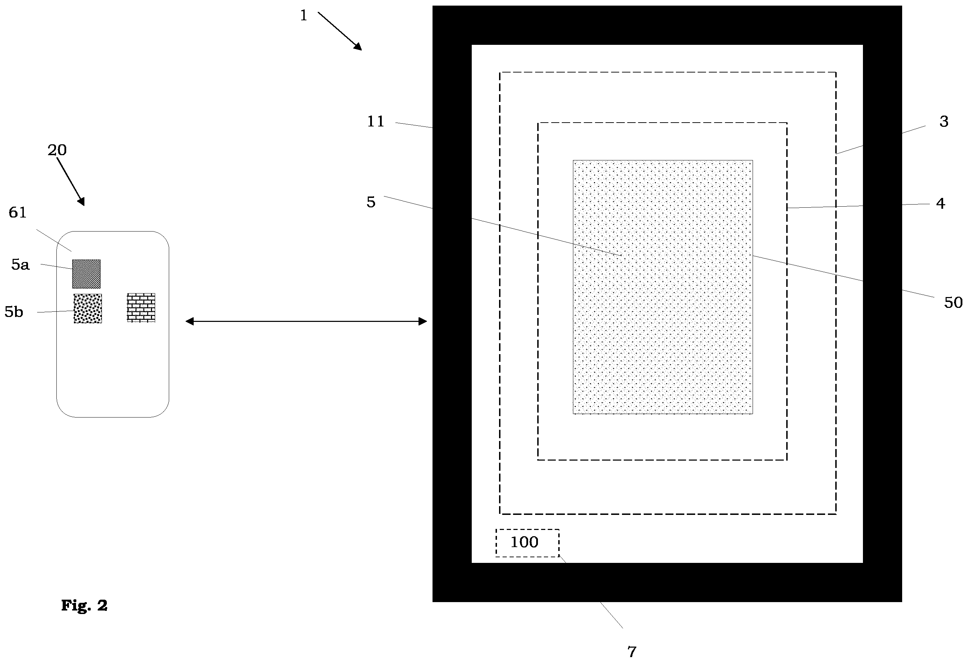

The artwork is in digital format, i.e. it is an artwork obtained by means of digital technology as part of the creative, for instance by means of computer graphics, to cite an example. The artwork in digital format is schematically indicated in figure 2 with reference number 5 inside the frame 1 whereas in figure 1 the frame is still empty, i.e. it does not include any artwork in digital format.

Still with reference to figure 1, the frame 1 includes an electronic paper 4. The electronic paper 4 (also known as e-paper, electronic ink, e-ink or electrophoretic display), is a display device that mimic the appearance of ordinary ink on paper. Unlike conventional flat panel displays that emit light, the electronic paper display reflects ambient light like paper. The artwork, therefore, is comfortable to see, moreover, the electronic paper 4 provide a wider viewing angle than most light-emitting displays. Furthermore, the electronic paper 4 holds the artwork (when loaded such as in figure 2) indefinitely without electricity. The display portion of the electronic paper is indicated in figure 1 and 2 with reference number 50.

The frame 1 further comprise a read only memory 7 storing an identifier 100 of the frame 1, a circuit board connected to the electronic paper 4, and a support structure 3 for supporting the electronic paper 4, the read only memory, the circuit board in the frame (1). Aesthetically, the frame is almost undistinguishable from a traditional painting: an external frameset is made of wood, glass or any other material and the artwork 5 (if loaded into the electronic paper 4) are visible, giving the same impression of the traditional watercolour painting. The read only memory and the circuit board are hidden and kept by the support structure 3 behind the electronic paper or on a side thereof which is however not visible from front.

As said above, the artwork is in digital format 5 and is initially not visible in the frame 1, such as in figure 1. At such stage, the artwork in digital format 5 is stored in a memory accessible to a user of an electronic device 20 which also is represented in figure 1. The electronic device 20 runs an application inside which the artwork is in digital format 5. The electronic device 20 is for instance a smartphone or tablet, but other devices (PCs, etc) may be considered.

The artwork in digital format 5 is associated with a non-fungible token. NFT means non-fungible tokens (NFTs), which are cryptographic assets based on blockchain technology, however not traded equivalently like other cryptographic assets (such as cryptocurrencies).

The user of the electronic device is registered as owner of the artwork in digital format 5 in a smart contract associated to the non-fungible token of the artwork. In particular, an electronic wallet of the user is registered as owner of the artwork in digital format 5. More in particular, an address of the electronic wallet of the user is registered as owner of the artwork in digital format 5. The smart contract is a program stored on a blockchain that run when predetermined conditions are met. It is used to automate the execution of an agreement so that all participants to the agreement can be immediately certain of the outcome, without any intermediary's involvement or time loss. It can also automate a workflow, triggering a next action when conditions are met.

Ownership of the NFT associated to the artwork in digital format 5 in favor of the frame 1 is tracked. At the stage of the method represented in figure 1, the ownership of the NFT is at the user side. The artwork in digital format 5 is displayed in the electronic device 20 since the electronic wallet of the user is registered as owner of the NFT of the artwork in digital format 5. At the stage of the method represented in figure 2, the ownership of the NFT is at the frame side. The artwork in digital format 5 is displayed in the display portion of the electronic paper 4 and the electronic wallet is no more registered as owner of the NFT of the artwork in digital format 5. The transition between the stages includes the following process. The user electronic device 20 is interconnected via radio to the circuit board of the frame 1, it receives the identifier 100 of the frame 1 from the circuit board, and requests an update of the smart contract associated to the non-fungible token to register a change of ownership of the artwork in digital format 5, wherein the change of ownership includes registering the identifier 100 of the frame 1 in the smart contract associated to the non-fungible token as owner of the artwork in digital format (5).

As a result of the change of ownership, the display portion 50 of the electronic paper 4 is configured to display the artwork in digital format 5.

Moreover, the artwork in digital format 5 is no longer displayed in the user electronic device 20. This is however not mandatory.

Advantageously, in case the artwork in digital format 5 has no authorized copies, the frame 1 is the sole piece (of artwork) which is the owner of the artwork in digital format 5. The artwork in digital format 5 may remain forever attached to the frame 1, i.e. loaded into the electronic paper 4, with no power requirements or consumption. Like traditional pictures, it may last forever in the frame 1. When exposed, in a house or museum, it may be proudly said that it is the original and sole. The status of the smart contract of the frame combined with the status of the smart contract of the NFT is a proof of ownership and authenticity.

The identifier 100 of the frame 1 includes:
- an identifier 200 of the block chain,
- the public address of the smart contract 300 associated to the frame 1
- a sequence number 301 released by the smart contract associated to the frame 1 for the frame 1.

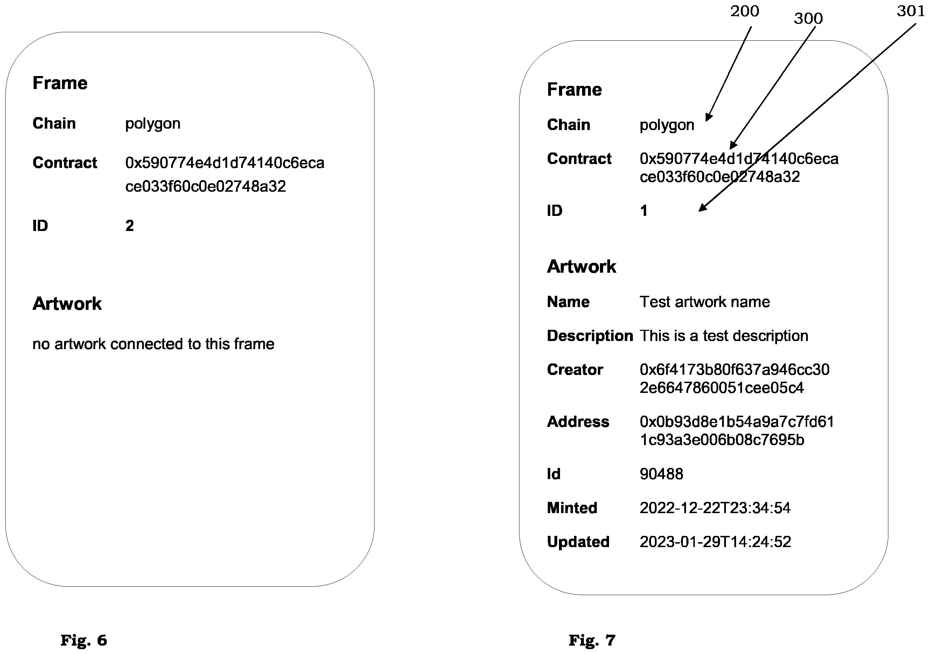

This information is for instance represented in fig. 7 where: the identifier 200 of the block chain is "polygon", the identifier of the smart contract 300 associated to the frame is 0xd8...388d and the sequence number 301 released by the smart contract associated to the frame for the frame 1 is 1.

This association of information is unique. The sequence number 301 released by the smart contract associated to the frame for the frame 1 is not released to any other frame 1. The read only memory 7 is programmed in factory to store the identifier 100 of the frame 1, including the sequence number 301 released by the smart contract associated to the frame. As will be described later, antitampering means are provided to ensure that this unique information may be brought only by the frame 1 as manufactured.

In particular, the step of requesting the update of the smart contract associated to the non-fungible token, to register the change of ownership of the artwork in digital format 5, includes:
- registering the address of the smart contract associated to the frame 1 in the smart contract associated to the non-fungible token.

Moreover, the step of registering the address of the smart contract associated to the frame 1 triggers a method in the smart contract associated to the frame 1 to register ownership of the non-fungible token to the identifier 100 of the frame 1.

Further details concerning the change in ownership of the non-fungible token are given below, also with reference fig. 17, representing a schema of the smart contract associated to the frame and the smart contract associated to the non-fungible token.

With reference to fig. 17, for instance, the non-fungible token may be based on ERC721 standard. The non-fungible token is created and managed by the smart contract associated (the smart contract can handle multiple non-fungible tokens). The smart contract associated to the token includes some methods:
- ownerOf: returns the public address of the electronic wallet (or smart contract) that owns the non-fungible token having a specified identification (id).
- safeTransferFrom: change the ownership of the non-fungible token with the specified identification from an owner to another owner.
- tokenURI: returns the address (link) where the metadata of the non-fungible token are saved (such as name, description, link to the file, etc). This metadata do not usually include ownership information.

The ownerOf and tokenURI methods read tables of the smart contract associated to the non-fungible token itself (i.e. its variables) while safeTransferFrom changes information saved in these tables (the table that holds the non-fungible token identification and association thereof with the owner address). When ownership of the non-fungible token is changed from the user electronic wallet to the frame, the safeTransferFrom function is called specifying, as recipient (in favor of), the public address of the smart contract of the frame and, as data field, the identifier 301 of the frame 1.

Therefore, the owner information is not saved in the non-fungible token or in its metadata but in the smart contract associated to the non-fungible token.

Based on the methods cited above, the following scenarios i)-ii) are supported as follows.
i) non-fungible token transfer from user electronic wallet to the frame
   - the safeTransferFrom method is called specifying the address of the smart contract of the frame as the recipient and the identifier 301 of the frame 1 as the date field;
   - The method sefeTransferFrom recognizes that the recipient is a smart contract and calls the onERC721Received method of the smart contract of the frame that associates the ownership of the non-fungible token at the frame specified by the identifier 301.
ii) transfer from frame 1 to electronic user wallet
   - a clear method in the smart contract of the frame is called. This method calls the method safeTransferFrom of the smart contract of the non-fungible token passing the address of the user electronic wallet as receiver.

The artwork in digital format 5 is associated to a corresponding hash code. A hashing function is used to determine the hash code starting from the artwork in digital format 5.

The smart contract stores the hash of the artwork in digital format 5 in association with the identifier 100 of the frame 1, when registering the identifier 100 of the frame 1 as owner of the artwork in digital format 5. For instance, still with reference to fig. 7, the address 0x03....616 is the hash code of the artwork in digital format 5. An identification (90483) of the artwork in digital format 5 is also stored.

Fig. 7 represents the smart contract of the frame 1 in case the artwork in digital format 5 is loaded in the electronic paper 4, such as in figure 2. Fig. 6, instead, represents the smart contract of the frame 1 in case the artwork in digital format 5 is not loaded in the electronic paper 4, i.e., when the electronic paper 4 is empty.

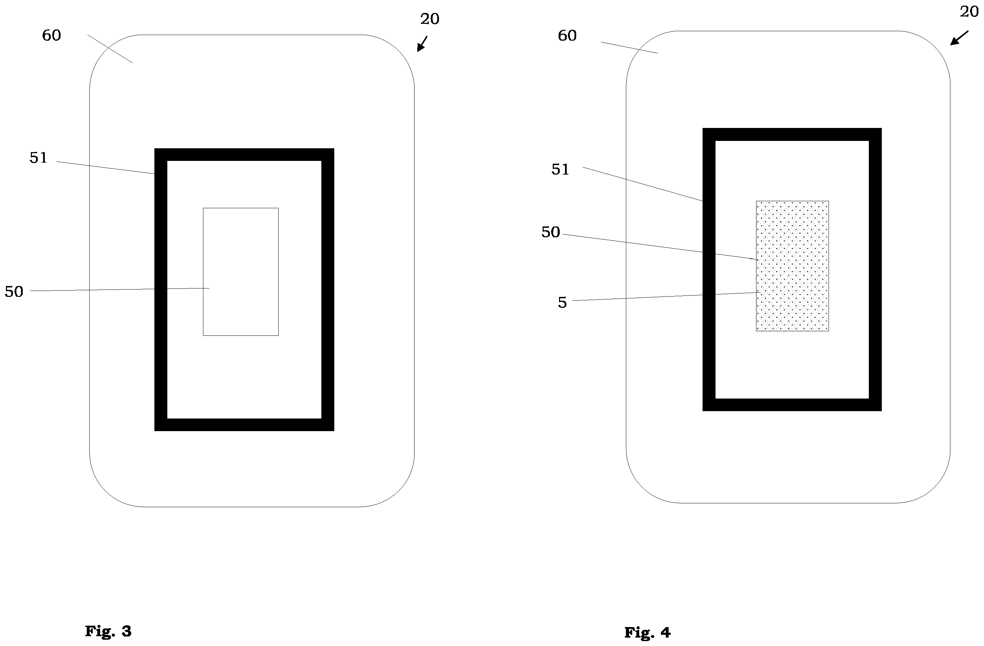

The electronic device 20 may control the status of the frame 1 to which it is connected. In particular, the application 61 running on the user electronic device 20 includes an interface 60, preferably slidable by touch (other interfaces may be adopted, for instance scrollable). The interface 60 is shown in fig. 3 and 4, where the electronic device 20 is enlarged with respect to fig. 1 and 2. The interface 60 display the image(s) 51, 511 of the frame 1 to which the user electronic device 20 is interconnected. Fig. 3 is the image of the frame 1 of fig. 1 in the interface 60, when no artwork in digital format 5 is loaded in the electronic paper 4; indeed, inside the area 50 (display area) no images is reproduced. Fig. 4 is the image of the frame 1 of fig. 2 in the interface 60, when the artwork in digital format 5 is loaded in the electronic paper 4; indeed, inside the area 50 an image is reproduced.

The description above, has been given with reference to one artwork in digital format 5; however, a plurality of artworks in digital format 5 may be handled by the method, for instance associated to a plurality of frames 1 that form the collection of the user.

In this respect, a plurality of non-fungible tokens 5, 5a, 5b may be associated to the smart contract or to a plurality of smart contracts, wherein the plurality of smart contracts is stored in the block chain or in a plurality of block chains. Indeed, not necessarily the method is based on a unique blockchain (such as Ethereum or Polygon) and more than one block chain may be adopted, provided that authenticity is guaranteed.

The interconnection between the user electronic device 20 via radio to the circuit board is protected by security means managed by the user of the user electronic device 20 after a set-up of the frame 1, wherein the security means prevents the frame 1 from being interconnected by users of other electronic devices.

Therefore, based on the above, the user electronic device 20 may be interconnectable via radio to a plurality of circuit boards supported by a respective plurality of frames.

The electronic device 20 may control the status of all the frames 1 to which it is connected. In case a plurality of frames 1 are handled, the interface 60 may display an image 511 at a time, such as in fig. 4, where the image of the frame 1 controlled by application 60 is displayed. By sliding the interface, another image (not represented in fig. 4) of another the frame 1, among the plurality of frames 1 controlled by application 61. Preferably one image of one frame for each slide of the slidable interface is given. Each of the images of the frames displayed in the interface 60 includes the corresponding artwork in digital format 5, if the frame 1 is coupled with the artwork in digital format 5. Otherwise, it does not include the artwork in digital format (if the frame is not coupled with the artwork) but, for instance, an empty space (or blank image).

The interface 61 (fig. 1) is suitable to display a plurality of artworks in digital format 5, 5a, 5b owned by the user of electronic device 20, based on an electronic wallet of the user.

Each one of the plurality of artworks in digital format 5, 5a, 5b are selectable in the interface 61 to be changed in ownership in favor of the frame 1 (or one of the plurality of frames) and to consequently configure the electronic paper 4 of the frame to display the selected one of the artworks in digital format 5, 5a, 5b.

The above describes the change of ownership of the selected one of the artwork in digital format 5 in favor of the frame 1. The change of ownership of the artwork in digital format 5 previously displayed in the frame 1, in favor of the user of electronic device 20, is handled in another process (the artwork in digital format 5 previously displayed in the frame 1 is no longer displayed in the frame 1, and the ownership of said artwork in digital format 5 previously displayed in the frame is changed in favor of the user of the electronic device 20, i.e. his wallet).

While the above description has been given to explain a how, according to an embodiment as disclosed, the artwork in digital format is transferred (including the ownership thereof) to the frame 1, the method further discloses the back operation, consisting in releasing the artwork in digital format (including the ownership thereof) to the electronic device.

In this case, the user electronic device 20 requests an update of the non-fungible token to register another change of ownership of the artwork in digital format 5. This change of ownership includes registering an identifier of the user electronic device 20 in the non-fungible token as owner of the artwork in digital format 5.

As a result of this change of ownership, a display portion 50 of the electronic paper 4 is emptied (for instance blanked), and the artwork in digital format 5 is displayed in the user electronic device 20.

The invention relates to the method mentioned above but also to the frame used to implement the method, as briefly summarized below, in structural terms.

The frame 1 includes a read only memory 7 storing an identifier 100 of the frame 1, a circuit board, a support structure 3 for supporting an electronic paper 4, the circuit board and the read only memory (7). The electronic paper (4) is connected to the circuit board and is suitable to display the artwork in digital format 5. The identifier 100 includes a block chain identifier, an identifier of a smart contract in the blockchain (public address) and a sequence number of the frame 1 in the smart contract. The artwork in digital format 5 is displayed in the electronic paper 4 only if the identifier 100 of the frame 1 is stored in the smart contract as owner of a non-fungible token associated to the artwork in digital format 5.

The frame 1 includes a radio interface for communicating with a user electronic device 20. The interface includes a near field communication device interconnected with the circuit board to wake up the circuit board when the near field communication device is in proximity of the user electronic device 20.

The frame 1 or the support structure 3 includes at least a visible frameset 11 around the electronic paper 4. The visible frameset 11 is at least in part in one of the following materials: glass, metal, wood, plastic, paper. The frameset 11 may be of different shapes, including: triangular, squared, rectangular, quadrangular, ovoidal, polygonal.

The read only memory 7 and/or the circuit board and/or the electronic paper 4 includes a weakening portion connected to the frame 1 so as to be broken if the read only memory 7 and/or the circuit board and/or the electronic paper 4 is detached from the support structure 3. Other antitampering means may be adopted with the scope to avoid that the electronic paper 4 or the board or the read only memory 7 are detached for fraud.

Further features, characteristics and advantages of the method and the frame are reported below.

It is disclosed a use case.

*The user buys a frame 1 and installs a mobile application 61 on his smartphone (which is the user electronic device 20) to pair the frame 1 with his smartphone 20. After the pairing, the user can connect his electronic wallet and upload the NFT image (the artwork in digital format 5) on the frame 1. The frame 1 consumes no energy. It has no wirings (of course, and if desired, nothing prevents to use wirings, if desired). The image is fixed on the electronic paper 4 (image animations are preferably not allowed). Ownership and authenticity of the NFT in the frame 1 is guaranteed by blockchain technology, which is embedded in the frame 1. A high-resolution e-paper 4 display looks like a traditional painting, as it is physically coloring the pixel without using backlight LEDs. The frame 1 allows a structural link with the artwork in digital format 5 (of course, and if desired, nothing prevents that electronic paper 4 are interchangeable: in this case, the user will be able to change the support 3 of the electronic paper 4, plugging it to a different frame, having a cover made with different materials and shapes). The users may be owners of artworks in digital format 5 (the NFTs thereof). The frame 1 as disclosed is the perfect support to enjoy and spread digital art in a secure, authentic, and sustainable way, to materialize digital art, to make digital art tangible, to provide a low-impact device, to guarantee the ownership*/ *authorship*/ *authenticity of the artwork. The frame is highly recognizable at a glance but is not invasive (it does not distract from the artwork itself); the frame 1 may be perceived has a premium or luxury object.*

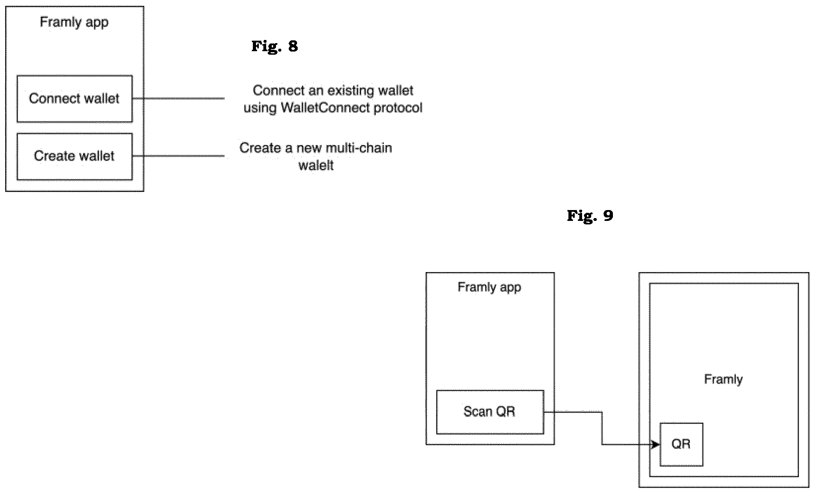

*The schema of* *fig. 8* *schematically represents how to connect an existing wallet to the application 61 on smartphone 20 which is dedicated to communication with the frame (also said Framly app 61) or create a new wallet. The connection of an existing wallet is made using the WalletConnect protocol.*

*The schema of* *fig. 9* *schematically represents how to connect a new frame 1 (named Framly) to the application 61 on smartphone which is dedicated to communication with the frame 1 (also said named Framly app 61). When a new frame 1 is bought, its initial owner is the smart contract (also said Framly smart contract). To change the ownership of the new frame 1 from the Framly smart contract to its first owner, the Framly authorized wallet create a new transaction to transfer the ownership in the Framly smart contract. A QR code is a secret code that the user has to give together with its wallet address and the frame identification to a Framly server to issue the transaction. If the secret code is correct for the given frame identification, the transaction is issued.*

*In order to **show connected frames** in the Framly app 61, the Framly app 61 calls the Framly smart contract to get the list of frames owned by the connected wallet (user_wallet).*

*In order to* ***upload* a *NFT* to a** ***connected frame,** the Framly app 61 calls the transfer function from the NFT's smart contract with the following inputs:*

```
     {
         to: Framly's smart contract address
         from: user_wallet's address
         data: frame_ID
         id: NFT's ID

}
 Since the "to" address is a smart contract, the onERC721Received
 function is called to the Framly smart contract. This function:
 -check if the user_wallet's address owns the frame with the specified
 frame_ID;
 -check if the rame has no ssociated NFTs;
 -if controls succeed, it updates the status of the smart contract writing in
 the corresponding mapping as follows:
  frame_ID ->
  {
     address: NFT's smart contract address Flows 3 id: FT's ID
  }
```

*In order to **remove a NFT,** the user's wallet create a remove NFT transaction passing as input the frame_ID. The Framly smart contract check if the user's wallet is the owner of frame_ID and if that frame has a connected NFT. If checks pass, the smart contract creates a transaction transfer to the NFT smart contract passing as input:*

```
  {
     to: user_wallet's address from: Framly smart contract address id: NFT's ID
  }
 
```

*In order to **transfer ownership of a frame,** the user's wallet creates a transfer transaction to the Framly smart contract, passing as input:*

```
{
     to: new_address
    from: user_wallet
     id: frame_ID
  }
```

*Process diagrams in an embodiment are also disclosed with reference to* *figures 10 to 16**.*

*In* *Fig.10* *represents the operation of creating a new device (frame 1) in the smart contract (see 3i). The user's wallet (see 1i) creates a new transaction calling the method (see 2i). The smart contract (see 3i, 4i) checks if the wallet that issued the transaction has the authorization of creating a new device. If the wallet is authorized (see 6i), then a new device is added and its owner is set to the address that issued the transaction. Otherwise, the transaction fails (see 5i) and the state of the smart contract is reverted to its previous state.*

*Fig.11* *shows the process of the first pairing of a new device (frame 1) by the first user. After the purchase, the user receives a secret code. To activate the device, the user sends to the server (see 10i) a request of activation, passing in input the secret code (see 7i), the device id (see 8i), and its wallet address (see 9i). If the secret code is verified for the given device id, the server (see 10i) issues a transaction to the smart contract (see 13i) to change the ownership of the device with the provided id from the original owner to the provided wallet address. Otherwise, the request is ignored (see 11i, 12i).*

*Fig.12* *shows the process of updating the NFT owned by a device (frame 1). The user sends a transfer transaction (see 18i) to the smart contract that issued the NFT. The input parameters include the id of the NFT that has to be transferred (see 15i), the id of the device to which the NFT has to be transferred (see 16i), and the address of the smart contract that manage the device (see 17i). If the smart contract that issued the NFT accept the transaction, it recognizes that the receiving address is a smart contact. So, the smart contract (see 19i) calls the onERC721Received at the Smart contact (see 21i). The smart contract (see 21i) does some checks, including checking if the device ID (see 16i) exists, and user's wallet address (see 14i) is its owner. If checks don't succeed, the transaction fails, and in cascade, the transaction of the NFT fails too. Otherwise, the smart contract (see 21i) check if the device with the provided id (16i) has already a NFT associated. If not, the state of the smart contract is updated and the transaction finishes with success. Otherwise, the previous NFT owned by the device with id (see 16i) is transferred to the wallet with address (see 14i).*

*Fig.13* *shows the process of removing a NFT form a device (see 29i) (frame 1). The transaction is sent to the smart contract (see 31i) by the user wallet (see 28i). The smart contract (see 31i) check if the user wallet address (see 28i) is the owner of device with the provided id (see 29i) and if the device with id (see 29i) has already an NFT. If the check passes then the smart contract (see 31i) issues a transaction to the smart contract that issued the NFT (see 36i). Otherwise, the transaction fails.*

*Fig. 14* *shows how to transfer the ownership of a device with a provided id from the user's wallet (see 38i) to a new owner address (see 39i). The transaction is issued by the user wallet (38i) to the smart contract (see 41i). The smart contract (see 41i) checks if user's wallet address (see 38i) is the owner of the device. If the check passes, the state of the smart contract is updated, otherwise the transaction fails.*

*Fig.15* *shows how to update the image on a device (frame 1). The application sends to the device the image, the id of the NFT, and the smart contract address. The device updates the displayed image, and its internal state.*

*Fig. 16* *shows the process of verifying the NFT inside a device (frame* 1). *On the device side, it is possible to read its internal state that returns the id of the device, the hash of the file, the ID of the NFT, and the address of the smart contract that issued that NFT. The App retrieves from the smart contract the NFT inside the frame with provided ID. The two results are compared: if the data is identical, then the device information is verified.*

*Hardware components according to a possible embodiment are disclosed here after. The whole system, defined from this point on as "the device," is mainly composed of three parts: the display, the frame and the board. On the front side, the device accommodates an e-paper display that is positioned and secured inside an unbendable and solid frame to avoid the possibility it can move. An anti-reflective protective glass shields the display from any impacts and provide an enjoyable effect on the artwork aesthetics. The image rendered in the display is clearly visible and looks like as a regular painted picture. The image cannot be animated like a gif or videos. In order to upload a new image, the device needs few seconds to remove the current image and then upload a new one. The back of the device hides a printed circuit board (PCB) that contain a Bluetooth antenna which allows the pairing of the device with the mobile application of the user. The board comes with the necessary drivers already installed and the environment already set up with the software. The board is equipped with a Bluetooth module and an NFC sensor. The device is equipped with an anti-tampering system that invalidates the operation of the whole device in case of hardware or software break-in. To upload an image, the device is able to autonomously wake up using an NFC sensor. To make it possible, the board has a software already installed that is activated by an NFC signal. Once awake, the board can be paired with the mobile app via Bluetooth. After updating the device, the board turns on deep sleep mode autonomously. Once the board is awake and the Bluetooth module is enabled, the system can pair the board with the mobile app using Bluetooth. To do this, the user needs to install the mobile application that needs the permission to use the NFC and the Bluetooth of the user mobile phone. The frame appears in the list of available devices and it is ready to be paired. The user just selects the frame and follows the prompts to pair it with the mobile device. Once the device is paired with the user mobile app, the app can be used to upload a new artwork to the board. To do this, the user needs to select the appropriate artwork in the app and hit "send to frame". The information about the artwork and the owner are permanently written in a smart contract.*

*NFC is used also used to save the info about the actual image uploaded to the frame. The memory inside the NFC sensor can be written only by the PCB and returns the hash of the last uploaded file and the frame's ID.*

*A smartphone Mobile App according to a possible embodiment* is *disclosed here after. In particular, a description is given:*
- *pair a wallet with walletconnect protocol*
- *pair a new device (frame)*
- *send NFT to frame and updated frame (shown image and status - communication using Bluetooth)*
- *turn on device using NFC*
- *get device info (about panel, version, supported chain, smart contract - address, owned NFT, frame id)*
- *get NFT owned by the paired wallet*
- *remove an NFT from a frame (it is sent to the frame's owner wallet)*
- *transfer frame ownership to a new wallet.*

## Claims

1. Method for coupling an artwork to a frame (1) supporting the artwork and intended to be hung or placed on a surface to be shown:
- the frame (1) includes an electronic paper (4), a read only memory (7) storing an identifier (100) of the frame (1), a circuit board connected to the electronic paper (4), and a support structure (3) for supporting the electronic paper (4), the read only memory and the circuit board in the frame (1);
- the artwork is in digital format (5) and is initially stored in a memory accessible to a user of an electronic device (20) by means of an application running in the user electronic device (20);
- the artwork in digital format (5) is associated to a non-fungible token, wherein said user is registered as owner of the artwork in digital format (5) in a smart contract associated to the non-fungible token of the artwork;
- the user electronic device (20) is interconnected via radio to the circuit board, receives the identifier (100) of the frame (1) from the circuit board, and requests an update of the smart contract associated to the non-fungible token to register a change of ownership of the artwork in digital format (5), wherein the change of ownership includes registering the identifier (100) of the frame (1) in the smart contract associated to the non-fungible token as owner of the artwork in digital format (5); and wherein
- as a result of said change of ownership, a display portion (50) of the electronic paper (4) is configured to display the artwork in digital format (5), wherein
the identifier (100) of the frame (1) includes
- an identifier (200) of a block chain,
- an identifier of a smart contract (300) associated to the frame (1) and
- a sequence number (301) released by the smart contract and associated to the frame (1),
wherein the sequence number (301) released by the smart contract associated to the frame (1) is not released to any other frame (1) and wherein the read only memory (7) is programmed in factory to store the identifier (100) of the frame (1), including the sequence number (301) released by the smart contract associated to the frame (1), wherein the identifier (100) of the frame (1) is unique, and wherein
the change of ownership includes the smart contract associated to the non-fungible token calling a method of the smart contract associated to the frame that associates the ownership of the non-fungible token to the frame.

2. Method for coupling the artwork to the frame according to claim 1, wherein as a result of said change of ownership the artwork in digital format (5) is no longer displayed in the user electronic device (20).

3. Method for coupling the artwork to the frame (1) according to claim 1, wherein said step of requesting the update of the smart contract to register the change of ownership of the artwork in digital format (5), includes registering an address of the smart contract associated to the frame (1) in the smart contract associated to the non-fungible token.

4. Method for coupling the artwork to the frame (1) according to claim 3, wherein said step of registering the address of the smart contract associated to the frame (1) triggers a method in the smart contract associated to the frame (1) to register ownership of the non-fungible token to the identifier (100) of the frame (1).

5. Method for coupling the artwork to the frame (1) according to claim 1, wherein the smart contract stores a hash of the artwork in digital format (5) in association with the identifier (100) of the frame (1), when registering the identifier (100) of the frame (1) in the non-fungible token as owner of the artwork in digital format (5).

6. Method for coupling according to claim 1, wherein
- a plurality of non-fungible tokens (5, 5a, 5b) are associated to said smart contract associated to the non-fungible token or to a plurality of smart contracts, wherein the plurality of smart contracts is stored in a same block chain or in a plurality of block chains.

7. Method for coupling according to claim 1, wherein
- said interconnection between the user electronic device (20) via radio to the circuit board is protected by security means managed by the user of the user electronic device (20) after a set-up of the frame (1), wherein said security means prevents the frame (1) from being interconnected by users of other electronic devices.

8. Method for coupling according to claim 1, wherein
- the user electronic device (20) is interconnectable via radio to a plurality of circuit boards supported by a respective plurality of frames.

9. Method for coupling according to claim 8, wherein
- the application running on the user electronic device (20) includes an interface (60), preferably slidable by touch, displaying images (51, 511) of the frames to which the user electronic device (20) is interconnectable, preferably one image of one frame for each slide of the slidable interface, wherein each of the images of the frames displayed in the interface (60) includes the corresponding artwork in digital format, if the frame (1) is coupled with the artwork in digital format, or does not include the artwork in digital format, if the frame is not coupled with the artwork.

10. Method for coupling according to claim 1, wherein
- the application running on the user electronic device (20) includes another interface (61) suitable to display a plurality of artworks in digital format (5, 5a, 5b) owned by the user electronic device (20), wherein each one of said plurality of artworks in digital format (5, 5a, 5b) are selectable in said another interface (61) to be changed in ownership in favor of the frame (1) and to configure the electronic paper (4) of the frame (1) to display the selected one of the artwork in digital format (5, 5a, 5b), wherein the artwork in digital format (5) previously displayed in the frame (1), if any, is no longer displayed in the frame (1) and the ownership of the artwork in digital format (5) previously displayed in the frame is changed in favor of the user electronic device (20).

11. Method for decoupling the artwork from the frame (1) according to claim 1 wherein:
- the user electronic device (20) requests an update of the smart contract associated to the non-fungible to register another change of ownership of the artwork in digital format (5), wherein said another change of ownership includes registering an identifier of an electronic wallet of the user in the smart contract associated to the non-fungible token as owner of the artwork in digital format (5); and wherein
- as a result of said another change of ownership, a display portion (50) of the electronic paper (4) is emptied, and the artwork in digital format (5) is displayed in the user electronic device (20).

12. Frame (1) for an artwork, including a read only memory (7) storing an identifier (100) of the frame (1), a circuit board, a support structure (3) for supporting an electronic paper (4), the circuit board and the read only memory (7), wherein the electronic paper (4) is connected to the circuit board and is suitable to display the artwork in digital format (5), wherein the identifier (100) includes a block chain identifier, an identifier of a smart contract of the frame in the block chain and a sequence number of the frame (1) in the smart contract, wherein the artwork in digital format (5) is displayed in the electronic paper (4) only if the identifier (100) of the frame (1) is stored in the smart contract of the frame as owner of a non-fungible token associated to the artwork in digital format (5), wherein a user electronic device (20) is configured to be interconnected via radio to the circuit board and to:
- receive the identifier (100) of the frame (1) from the circuit board, and
- request an update of the smart contract associated to the non-fungible token for registering a change of ownership of the artwork in digital format (5) wherein, in use, the identifier (100) of the frame (1) in the smart contract associated to the non-fungible token is registered as owner of the artwork in digital format (5) as a result of said change of ownership,
the identifier (100) of the frame (1) includes
- an identifier (200) of a block chain,
- an identifier of a smart contract (300) associated to the frame (1) and
- a sequence number (301) released by the smart contract and associated to the frame (1),
wherein the sequence number (301) released by the smart contract associated to the frame (1) is not released to any other frame (1) and wherein the read only memory (7) is programmed in factory to store the identifier (100) of the frame (1), including the sequence number (301) released by the smart contract associated to the frame (1), wherein the identifier (100) of the frame (1) is unique, and wherein
the change of ownership includes the smart contract associated to the non-fungible token calling a method of the smart contract associated to the frame that associates the ownership of the non-fungible token to the frame.

13. Frame (1) for the artwork according to claim 12, including a radio interface for communicating with a user electronic device (20), the interface including a near field communication device interconnected with the circuit board to wake up the circuit board when the near field communication device is in proximity of the user electronic device (20).

14. Frame (1) for the artwork according to claim 12, wherein the support structure (3) includes at least a visible frameset (11) around the electronic paper (4), the visible frameset (11) being at least in part in one of the following materials: glass, metal, wood, plastic, paper, wherein the visible frameset (11) is in one of the following shapes: triangular, squared, rectangular, quadrangular, ovoidal, polygonal, and wherein the read only memory (7) and/or the circuit board and/or the electronic paper (4) includes a weakening portion connected to the frame (1) so as to be broken if the read only memory (7) and/or the circuit board and/or the electronic paper (4) is detached from the support structure (3).

## Patentansprüche

1. Verfahren zum Koppeln eines Kunstwerks mit einem Rahmen (1), der das Kunstwerk trägt und zur Aufhängung oder Platzierung auf einer Oberfläche vorgesehen ist, um angezeigt zu werden:
- der Rahmen (1) umfasst ein elektronisches Papier (4), einen Nur-Lese-Speicher (7), der eine Kennung (100) des Rahmens (1) speichert, eine Leiterplatte, die mit dem elektronischen Papier (4) verbunden ist, und eine Trägerstruktur (3) zur Unterstützung des elektronischen Papiers (4), des Nur-Lese-Speichers und der Leiterplatte im Rahmen (1);
- das Kunstwerk liegt in digitalem Format (5) vor und ist zunächst in einem Speicher abgelegt, der einem Benutzer eines elektronischen Geräts (20) über eine auf dem Benutzergerät (20) laufende Anwendung zugänglich ist;
- das Kunstwerk im digitalen Format (5) ist mit einem Non-Fungible Token (NFT) verknüpft, wobei der Benutzer als Eigentümer des digitalen Kunstwerks (5) in einem mit dem NFT verknüpften Smart Contract registriert ist;
- das Benutzergerät (20) ist über Funk mit der Leiterplatte verbunden, empfängt die Kennung (100) des Rahmens (1) von der Leiterplatte und fordert eine Aktualisierung des mit dem NFT verknüpften Smart Contracts an, um einen Eigentumswechsel des digitalen Kunstwerks (5) zu registrieren, wobei der Eigentumswechsel die Registrierung der Kennung (100) des Rahmens (1) im mit dem NFT verknüpften Smart Contract als Eigentümer des digitalen Kunstwerks (5) umfasst; und wobei
- infolge dieses Eigentumswechsels ein Anzeigebereich (50) des elektronischen Papiers (4) so konfiguriert ist, dass das digitale Kunstwerk (5) angezeigt wird, wobei
die Kennung (100) des Rahmens (1) umfasst:
- eine Kennung (200) einer Blockchain,
- eine Kennung eines mit dem Rahmen (1) verbundenen Smart Contracts (300) und
- eine vom Smart Contract vergebene Sequenznummer (301), die mit dem Rahmen (1) verknüpft ist,
wobei die vom Smart Contract vergebene Sequenznummer (301), die mit dem Rahmen (1) verknüpft ist, keinem anderen Rahmen (1) zugewiesen wird und wobei der Nur-Lese-Speicher (7) werkseitig programmiert ist, um die Kennung (100) des Rahmens (1) zu speichern, einschließlich der vom Smart Contract vergebenen Sequenznummer (301), die mit dem Rahmen (1) verknüpft ist, wobei die Kennung (100) des Rahmens (1) eindeutig ist, und wobei
der Eigentumswechsel umfasst, dass der mit dem NFT verknüpfte Smart Contract eine Methode des mit dem Rahmen verbundenen Smart Contracts aufruft, die das Eigentum des NFTs dem Rahmen zuweist.

2. Verfahren zum Koppeln des Kunstwerks mit dem Rahmen nach Anspruch 1, wobei infolge des Eigentumswechsels das digitale Kunstwerk (5) nicht mehr auf dem Benutzergerät (20) angezeigt wird.

3. Verfahren zum Koppeln des Kunstwerks mit dem Rahmen (1) nach Anspruch 1, wobei der Schritt des Anforderns der Aktualisierung des Smart Contracts zur Registrierung des Eigentumswechsels des digitalen Kunstwerks (5) die Registrierung einer Adresse des mit dem Rahmen (1) verknüpften Smart Contracts im mit dem NFT verknüpften Smart Contract umfasst.

4. Verfahren zum Koppeln des Kunstwerks mit dem Rahmen (1) nach Anspruch 3, wobei der Schritt der Registrierung der Adresse des mit dem Rahmen (1) verknüpften Smart Contracts eine Methode im mit dem Rahmen (1) verknüpften Smart Contract auslöst, um das Eigentum des NFTs an die Kennung (100) des Rahmens (1) zu übertragen.

5. Verfahren zum Koppeln des Kunstwerks mit dem Rahmen (1) nach Anspruch 1, wobei der Smart Contract einen Hash des digitalen Kunstwerks (5) in Verbindung mit der Kennung (100) des Rahmens (1) speichert, wenn die Kennung (100) des Rahmens (1) als Eigentümer des digitalen Kunstwerks (5) im NFT registriert wird.

6. Verfahren zum Koppeln nach Anspruch 1, wobei
- eine Vielzahl von NFTs (5, 5a, 5b) mit dem mit dem NFT verknüpften Smart Contract oder mit einer Vielzahl von Smart Contracts verknüpft sind, wobei die Vielzahl von Smart Contracts entweder in derselben Blockchain oder in mehreren Blockchains gespeichert ist.

7. Verfahren zum Koppeln nach Anspruch 1, wobei
- die Funkverbindung zwischen dem Benutzergerät (20) und der Leiterplatte durch Sicherheitsmechanismen geschützt ist, die vom Benutzer des Benutzergeräts (20) nach der Einrichtung des Rahmens (1) verwaltet werden, wobei diese Sicherheitsmechanismen verhindern, dass der Rahmen (1) von Benutzern anderer elektronischer Geräte verbunden wird.

8. Verfahren zum Koppeln nach Anspruch 1, wobei
- das Benutzergerät (20) über Funk mit einer Vielzahl von Leiterplatten verbunden werden kann, die jeweils von einer Vielzahl von Rahmen getragen werden.

9. Verfahren zum Koppeln nach Anspruch 8, wobei
- die auf dem Benutzergerät (20) laufende Anwendung eine Schnittstelle (60) umfasst, vorzugsweise per Berührung verschiebbar, die Bilder (51, 511) der Rahmen anzeigt, mit denen das Benutzergerät (20) verbunden werden kann, vorzugsweise ein Bild eines Rahmens pro Verschiebung der verschiebbaren Schnittstelle, wobei jedes der in der Schnittstelle (60) angezeigten Bilder der Rahmen das entsprechende digitale Kunstwerk enthält, wenn der Rahmen (1) mit dem digitalen Kunstwerk gekoppelt ist, oder das digitale Kunstwerk nicht enthält, wenn der Rahmen nicht gekoppelt ist.

10. Verfahren zum Koppeln nach Anspruch 1, wobei
- die auf dem Benutzergerät (20) laufende Anwendung eine weitere Schnittstelle (61) umfasst, die geeignet ist, eine Vielzahl von digitalen Kunstwerken (5, 5a, 5b) anzuzeigen, die sich im Besitz des Benutzergeräts (20) befinden, wobei jedes dieser digitalen Kunstwerke (5, 5a, 5b) in der weiteren Schnittstelle (61) auswählbar ist, um das Eigentum zugunsten des Rahmens (1) zu übertragen und das elektronische Papier (4) des Rahmens (1) so zu konfigurieren, dass das ausgewählte digitale Kunstwerk (5, 5a, 5b) angezeigt wird, wobei das zuvor im Rahmen (1) angezeigte digitale Kunstwerk (5), falls vorhanden, nicht mehr im Rahmen (1) angezeigt wird und das Eigentum des zuvor im Rahmen angezeigten digitalen Kunstwerks (5) zugunsten des Benutzergeräts (20) geändert wird.

11. Verfahren zum Entkoppeln des Kunstwerks vom Rahmen (1) nach Anspruch 1, wobei:
- das Benutzergerät (20) eine Aktualisierung des mit dem Non-Fungible Token verknüpften Smart Contracts anfordert, um einen weiteren Eigentumswechsel des digitalen Kunstwerks (5) zu registrieren, wobei dieser weitere Eigentumswechsel die Registrierung einer Kennung einer elektronischen Geldbörse des Benutzers im mit dem Non-Fungible Token verknüpften Smart Contract als Eigentümer des digitalen Kunstwerks (5) umfasst; und wobei
- infolge dieses weiteren Eigentumswechsels ein Anzeigebereich (50) des elektronischen Papiers (4) geleert wird und das digitale Kunstwerk (5) auf dem Benutzergerät (20) angezeigt wird.

12. Rahmen (1) für ein Kunstwerk, umfassend einen Nur-Lese-Speicher (7), der eine Kennung (100) des Rahmens (1) speichert, eine Leiterplatte, eine Trägerstruktur (3) zur Aufnahme eines elektronischen Papiers (4), die Leiterplatte und den Nur-Lese-Speicher (7), wobei das elektronische Papier (4) mit der Leiterplatte verbunden ist und zur Anzeige des Kunstwerks im digitalen Format (5) geeignet ist, wobei die Kennung (100) eine Blockchain-Kennung, eine Kennung eines Smart Contracts des Rahmens in der Blockchain und eine Sequenznummer des Rahmens (1) im Smart Contract umfasst, wobei das Kunstwerk im digitalen Format (5) auf dem elektronischen Papier (4) nur dann angezeigt wird, wenn die Kennung (100) des Rahmens (1) im Smart Contract des Rahmens als Eigentümer eines mit dem Kunstwerk im digitalen Format (5) verknüpften Non-Fungible Tokens gespeichert ist, wobei ein elektronisches Benutzergerät (20) so konfiguriert ist, dass es über Funk mit der Leiterplatte verbunden werden kann und:
- die Kennung (100) des Rahmens (1) von der Leiterplatte empfängt und
- eine Aktualisierung des mit dem Non-Fungible Token verknüpften Smart Contracts anfordert, um eine Änderung des Eigentums an dem Kunstwerk im digitalen Format (5) zu registrieren, wobei im Gebrauch die Kennung (100) des Rahmens (1) im mit dem Non-Fungible Token verknüpften Smart Contract als Eigentümer des Kunstwerks im digitalen Format (5) infolge dieser Eigentumsänderung eingetragen wird.
Die Kennung (100) des Rahmens (1) umfasst:
- eine Kennung (200) einer Blockchain,
- eine Kennung eines mit dem Rahmen (1) verknüpften Smart Contracts (300) und
- eine vom Smart Contract vergebene Sequenznummer (301), die dem Rahmen (1) zugeordnet ist,
wobei die vom mit dem Rahmen (1) verknüpften Smart Contract vergebene Sequenznummer (301) keinem anderen Rahmen (1) zugewiesen wird und wobei der Nur-Lese-Speicher (7) werkseitig so programmiert ist, dass er die Kennung (100) des Rahmens (1), einschließlich der vom mit dem Rahmen (1) verknüpften Smart Contract vergebenen Sequenznummer (301), speichert, wobei die Kennung (100) des Rahmens (1) eindeutig ist, und wobei die Eigentumsänderung das Aufrufen einer Methode des mit dem Rahmen verknüpften Smart Contracts durch den mit dem Non-Fungible Token verknüpften Smart Contract umfasst, wodurch das Eigentum am Non-Fungible Token mit dem Rahmen verbunden wird.

13. Rahmen (1) für das Kunstwerk gemäß Anspruch 12, umfassend eine Funk-Schnittstelle zur Kommunikation mit einem elektronischen Benutzergerät (20), wobei die Schnittstelle eine Nahfeldkommunikationseinrichtung umfasst, die mit der Leiterplatte verbunden ist, um die Leiterplatte zu aktivieren, wenn sich die Nahfeldkommunikationseinrichtung in der Nähe des elektronischen Benutzergeräts (20) befindet.

14. Rahmen (1) für das Kunstwerk gemäß Anspruch 12, wobei die Trägerstruktur (3) mindestens ein sichtbares Rahmen-Set (11) um das elektronische Papier (4) umfasst, wobei das sichtbare Rahmen-Set (11) zumindest teilweise aus einem der folgenden Materialien besteht: Glas, Metall, Holz, Kunststoff, Papier, wobei das sichtbare Rahmen-Set (11) eine der folgenden Formen aufweist: dreieckig, quadratisch, rechteckig, viereckig, oval, polygonal, und wobei der Nur-Lese-Speicher (7) und/oder die Leiterplatte und/oder das elektronische Papier (4) einen Schwächungsbereich umfasst, der mit dem Rahmen (1) verbunden ist, sodass er zerstört wird, falls der Nur-Lese-Speicher (7) und/oder die Leiterplatte und/oder das elektronische Papier (4) von der Trägerstruktur (3) entfernt wird.

## Revendications

1. Procédé de couplage d'une œuvre d'art à un cadre (1) supportant l'œuvre d'art et destiné à être suspendu ou placé sur une surface pour être affiché:
- le cadre (1) comprend un papier électronique (4), une mémoire en lecture seule (7) stockant un identifiant (100) du cadre (1), une carte de circuit imprimé connectée au papier électronique (4) et une structure de support (3) permettant de maintenir le papier électronique (4), la mémoire en lecture seule et la carte de circuit imprimé à l'intérieur du cadre (1);
- l'œuvre d'art est sous format numérique (5) et est initialement stockée dans une mémoire accessible à un utilisateur d'un dispositif électronique (20) via une application s'exécutant sur le dispositif électronique utilisateur (20);
- l'œuvre d'art sous format numérique (5) est associée à un jeton non fongible, l'utilisateur étant enregistré comme propriétaire de l'œuvre d'art sous format numérique (5) dans un contrat intelligent associé au jeton non fongible de l'œuvre d'art;
- le dispositif électronique utilisateur (20) est interconnecté par radio à la carte de circuit imprimé, reçoit l'identifiant (100) du cadre (1) depuis la carte de circuit imprimé et demande une mise à jour du contrat intelligent associé au jeton non fongible afin d'enregistrer un changement de propriété de l'œuvre d'art sous format numérique (5), ce changement de propriété incluant l'enregistrement de l'identifiant (100) du cadre (1) dans le contrat intelligent associé au jeton non fongible en tant que propriétaire de l'œuvre d'art sous format numérique (5); et
- à la suite de ce changement de propriété, une portion d'affichage (50) du papier électronique (4) est configurée pour afficher l'œuvre d'art sous format numérique (5), où l'identifiant (100) du cadre (1) comprend:
- un identifiant (200) d'une blockchain,
- un identifiant d'un contrat intelligent (300) associé au cadre (1), et
- un numéro de séquence (301) attribué par le contrat intelligent et associé au cadre (1),
où le numéro de séquence (301) attribué par le contrat intelligent associé au cadre (1) n'est attribué à aucun autre cadre (1) et où la mémoire en lecture seule (7) est programmée en usine pour stocker l'identifiant (100) du cadre (1), incluant le numéro de séquence (301) attribué par le contrat intelligent associé au cadre (1), rendant ainsi l'identifiant (100) du cadre (1) unique, et où
le changement de propriété comprend l'appel par le contrat intelligent associé au jeton non fongible d'une méthode du contrat intelligent associé au cadre, qui associe la propriété du jeton non fongible au cadre.

2. Procédé de couplage de l'œuvre d'art au cadre selon la revendication 1, dans lequel, à la suite de ce changement de propriété, l'œuvre d'art sous format numérique (5) n'est plus affichée sur le dispositif électronique utilisateur (20).

3. Procédé de couplage de l'œuvre d'art au cadre (1) selon la revendication 1, dans lequel ladite étape de demande de mise à jour du contrat intelligent pour enregistrer le changement de propriété de l'œuvre d'art sous format numérique (5) comprend l'enregistrement d'une adresse du contrat intelligent associé au cadre (1) dans le contrat intelligent associé au jeton non fongible.

4. Procédé de couplage de l'œuvre d'art au cadre (1) selon la revendication 3, dans lequel ladite étape d'enregistrement de l'adresse du contrat intelligent associé au cadre (1) déclenche une méthode dans le contrat intelligent associé au cadre (1) afin d'enregistrer la propriété du jeton non fongible sur l'identifiant (100) du cadre (1).

5. Procédé de couplage de l'œuvre d'art au cadre (1) selon la revendication 1, dans lequel le contrat intelligent stocke un hachage de l'œuvre d'art sous format numérique (5) en association avec l'identifiant (100) du cadre (1), lors de l'enregistrement de l'identifiant (100) du cadre (1) dans le jeton non fongible en tant que propriétaire de l'œuvre d'art sous format numérique (5).

6. Procédé de couplage selon la revendication 1, dans lequel
- une pluralité de jetons non fongibles (5, 5a, 5b) sont associés audit contrat intelligent associé au jeton non fongible ou à une pluralité de contrats intelligents, ladite pluralité de contrats intelligents étant stockée dans une même blockchain ou dans une pluralité de blockchains.

7. Procédé de couplage selon la revendication 1, dans lequel
- ladite interconnexion entre le dispositif électronique utilisateur (20) via radio et la carte de circuit imprimé est protégée par des moyens de sécurité gérés par l'utilisateur du dispositif électronique utilisateur (20) après une configuration initiale du cadre (1), ces moyens de sécurité empêchant le cadre (1) d'être interconnecté par des utilisateurs d'autres dispositifs électroniques.

8. Procédé de couplage selon la revendication 1, dans lequel
- le dispositif électronique utilisateur (20) est interconnectable par radio à une pluralité de cartes de circuit imprimé supportées par une pluralité respective de cadres.

9. Procédé de couplage selon la revendication 8, dans lequel
- l'application s'exécutant sur le dispositif électronique utilisateur (20) comprend une interface (60), de préférence défilable par toucher, affichant des images (51, 511) des cadres auxquels le dispositif électronique utilisateur (20) est interconnectable, de préférence une image d'un cadre par page de l'interface défilable, chacune des images des cadres affichées dans l'interface (60) incluant l'œuvre d'art sous format numérique correspondante si le cadre (1) est couplé à l'œuvre d'art sous format numérique, ou n'incluant pas l'œuvre d'art sous format numérique si le cadre n'est pas couplé à l'œuvre d'art.

10. Procédé de couplage selon la revendication 1, dans lequel
- l'application s'exécutant sur le dispositif électronique utilisateur (20) comprend une autre interface (61) permettant d'afficher une pluralité d'œuvres d'art sous format numérique (5, 5a, 5b) possédées par le dispositif électronique utilisateur (20), chacune desdites œuvres d'art sous format numérique (5, 5a, 5b) étant sélectionnable dans ladite autre interface (61) afin d'être transférée en propriété au cadre (1) et de configurer le papier électronique (4) du cadre (1) pour afficher l'œuvre d'art sous format numérique sélectionnée (5, 5a, 5b), l'œuvre d'art sous format numérique (5) précédemment affichée dans le cadre (1), le cas échéant, n'étant plus affichée dans le cadre (1) et la propriété de l'œuvre d'art sous format numérique (5) précédemment affichée dans le cadre étant transférée au dispositif électronique utilisateur (20).

11. Procédé de découplage de l'œuvre d'art du cadre (1) selon la revendication 1, dans lequel:
- le dispositif électronique utilisateur (20) demande une mise à jour du contrat intelligent associé au jeton non fongible afin d'enregistrer un autre changement de propriété de l'œuvre d'art sous format numérique (5), cet autre changement de propriété comprenant l'enregistrement d'un identifiant d'un portefeuille électronique de l'utilisateur dans le contrat intelligent associé au jeton non fongible en tant que propriétaire de l'œuvre d'art sous format numérique (5); et dans lequel
- à la suite de cet autre changement de propriété, une portion d'affichage (50) du papier électronique (4) est vidée et l'œuvre d'art sous format numérique (5) est affichée dans le dispositif électronique utilisateur (20).

12. Cadre (1) pour une œuvre d'art, comprenant une mémoire en lecture seule (7) stockant un identifiant (100) du cadre (1), une carte de circuit imprimé, une structure de support (3) pour supporter un papier électronique (4), la carte de circuit imprimé et la mémoire en lecture seule (7), le papier électronique (4) étant connecté à la carte de circuit imprimé et étant apte à afficher l'œuvre d'art sous format numérique (5), l'identifiant (100) comprenant un identifiant de blockchain, un identifiant de contrat intelligent du cadre dans la blockchain et un numéro de séquence du cadre (1) dans le contrat intelligent, l'œuvre d'art sous format numérique (5) étant affichée sur le papier électronique (4) uniquement si l'identifiant (100) du cadre (1) est enregistré dans le contrat intelligent du cadre en tant que propriétaire d'un jeton non fongible associé à l'œuvre d'art sous format numérique (5), un dispositif électronique utilisateur (20) étant configuré pour être interconnecté via radio à la carte de circuit imprimé et pour:
- recevoir l'identifiant (100) du cadre (1) depuis la carte de circuit imprimé, et
- demander une mise à jour du contrat intelligent associé au jeton non fongible afin d'enregistrer un changement de propriété de l'œuvre d'art sous format numérique (5), où, en utilisation, l'identifiant (100) du cadre (1) dans le contrat intelligent associé au jeton non fongible est enregistré comme propriétaire de l'œuvre d'art sous format numérique (5) à la suite dudit changement de propriété,
l'identifiant (100) du cadre (1) comprend
- un identifiant (200) d'une blockchain,
- un identifiant de contrat intelligent (300) associé au cadre (1), et
- un numéro de séquence (301) attribué par le contrat intelligent et associé au cadre (1),
où le numéro de séquence (301) attribué par le contrat intelligent associé au cadre (1) n'est attribué à aucun autre cadre (1) et où la mémoire en lecture seule (7) est programmée en usine pour stocker l'identifiant (100) du cadre (1), y compris le numéro de séquence (301) attribué par le contrat intelligent associé au cadre (1), rendant ainsi l'identifiant (100) du cadre (1) unique, et où le changement de propriété comprend l'appel par le contrat intelligent associé au jeton non fongible d'une méthode du contrat intelligent associé au cadre, qui associe la propriété du jeton non fongible au cadre.

13. Cadre (1) pour l'œuvre d'art selon la revendication 12, comprenant une interface radio pour communiquer avec un dispositif électronique utilisateur (20), l'interface incluant un dispositif de communication en champ proche interconnecté avec la carte de circuit imprimé afin d'activer la carte de circuit imprimé lorsque le dispositif de communication en champ proche est à proximité du dispositif électronique utilisateur (20).

14. Cadre (1) pour l'œuvre d'art selon la revendication 12, dans lequel la structure de support (3) comprend au moins un encadrement visible (11) autour du papier électronique (4), l'encadrement visible (11) étant au moins en partie dans l'un des matériaux suivants: verre, métal, bois, plastique, papier, et ayant l'une des formes suivantes: triangulaire, carrée, rectangulaire, quadrangulaire, ovale, polygonale, et où la mémoire en lecture seule (7) et/ou la carte de circuit imprimé et/ou le papier électronique (4) comprend une portion de fragilisation connectée au cadre (1) afin d'être rompue si la mémoire en lecture seule (7) et/ou la carte de circuit imprimé et/ou le papier électronique (4) est détaché(e) de la structure de support (3).
